# FASCICULE DE BREVET EUROPEEN

(11) **EP 3 537 232 B1**
(45) Date de publication et mention de la délivrance du brevet: **19.11.2025**
(21) Numéro de dépôt: 18160983.5
(22) Date de dépôt: 09.03.2018
(51) Int. Cl.: G04C 3/12

(54) **MOTEUR PIEZOÉLECTRIQUE ROTATIF POUR DISQUE**
PIEZOELEKTRISCHER KREISKOLBENMOTOR FÜR SCHEIBE
ROTARY PIEZOELECTRIC MOTOR FOR DISC

(43) Date de publication de la demande: 11.09.2019
(73) Titulaire: ETA SA Manufacture Horlogère Suisse, 2540 Grenchen (CH)
(72) Inventeur: LAGORGETTE, Pascal, 2502 Bienne (CH); MEYER, Pascal, 2000 Neuchâtel (CH)
(74) Mandataire: ICB SA

(56) Documents cités:
- WO-A1-02/25801
- FR-A- 1 352 079
- US-B1- 6 323 578

## Description

### Domaine de l'invention

L'invention se rapporte au domaine technique des moteurs piézoélectriques rotatifs.

### Arrière-plan de l'invention

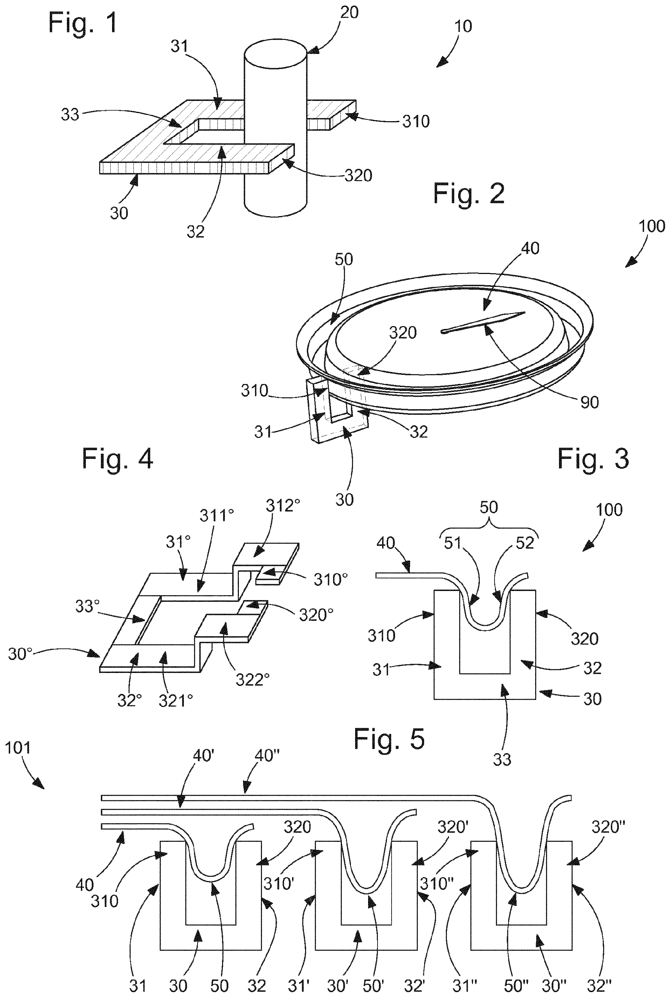

Un moteur piézoélectrique rotatif comporte classiquement un élément passif et un actionneur permettant de mettre en rotation l'élément passif en utilisant l'effet piézoélectrique. En référence à la figure 1, on connait en particulier les moteurs piézoélectriques rotatifs 10 pour lesquels l'élément passif 20 comporte un cylindre et l'actionneur piézoélectrique comporte un résonateur 30 comprenant une paire de bras 31, 32 connectés l'un à l'autre au niveau d'une zone de connexion 33, sensiblement en forme de diapason ou de U. L'actionneur piézoélectrique comporte en outre deux éléments piézoélectriques (non représentés), chacun attaché à l'un des bras 31, 32, et jouant le rôle de moyens d'excitation des bras pour leur imposer des vibrations. L'élément passif 20 passe entre les bras 31, 32 du résonateur. Plus précisément, une région de la surface latérale de l'élément passif 20 est en contact de part et d'autre avec les extrémités libres 310, 320 des bras 31, 32, de sorte que l'élément passif 20 soit mis en rotation par friction des extrémités libres 310, 320 des bras 31, 32 sur la région de contact.

Dans certaines applications, notamment les applications horlogères, on souhaiterait que l'actionneur piézoélectrique précédemment décrit puisse entrainer en rotation un disque et non pas un cylindre.

Le document US 6 323 578 B1 décrit un moteur piézoélectrique rotatif comprenant un actionneur piézoélectrique avec un résonateur à deux bras connectés à une extrémité, les extrémités libres frottant contre un disque passif pour entraîner celui-ci en rotation.

### Résumé de l'invention

Le but de la présente invention est de proposer un moteur piézoélectrique rotatif pour lequel l'actionneur piézoélectrique comporte un résonateur présentant une paire de bras et l'élément passif comporte un disque pouvant être entraîné en rotation par ledit actionneur.

A cet effet, selon un premier aspect, l'invention se rapporte à un moteur piézoélectrique rotatif selon la revendication 1.

Par disque, on entend un élément de forme ronde, plein ou contenant des parties évidées. Il peut s'agir par exemple d'un disque de quantièmes, d'un disque des phases lunaires, etc.

Un tel moteur comporte peu de composants, est peu encombrant, et permet une grande vitesse de rotation du disque grâce à un couple disponible élevé.

Selon la présente invention, le rebord présente une section radiale sensiblement en forme de U de sorte que chacune des deux branches du U appuie sur l'extrémité libre d'un bras. En d'autres termes, le rebord présente un repliement.

Ceci permet d'appliquer une précontrainte (aussi appelée précharge) à l'interface entre l'actionneur piézoélectrique et l'élément passif, pour fixer le couple de maintien sans alimentation du moteur, c'est-à-dire sans excitation des bras.

Selon un deuxième aspect, l'invention se rapporte à un ensemble comprenant au moins deux moteurs piézoélectriques selon le premier aspect, les disques des éléments passifs des moteurs piézoélectriques étant concentriques, superposés et de diamètres différents, chaque disque excepté celui de diamètre le plus faible recouvrant les disques de diamètre inférieur.

On comprend que les résonateurs des éléments actifs sont positionnés à des distances différentes de l'axe des disques mais dans un même plan : il est ainsi possible d'entraîner en rotation plusieurs disques sans que cela ne soit encombrant. Un système de détection de position est facilement intégrable, garantissant la synchronisation des disques à tout moment.

Selon un troisième aspect, l'invention se rapporte à une pièce d'horlogerie comportant un moteur piézoélectrique ou un ensemble d'au moins deux moteurs piézoélectriques tels que détaillés ci-dessus.

Dans un mode de réalisation non limitatif, la pièce d'horlogerie comporte une aiguille fixée à une extrémité de la partie cylindrique.

### Description sommaire des dessins

D'autres particularités et avantages ressortiront clairement de la description qui en est faite ci-après, à titre indicatif et nullement limitatif, en référence aux dessins annexés, dans lesquels :
- la figure 1, déjà décrite, représente schématiquement une partie d'un moteur piézoélectrique rotatif selon l'art antérieur pour lequel l'élément à entrainer en rotation est un cylindre,
- la figure 2 représente schématiquement une partie d'un moteur piézoélectrique rotatif selon un premier mode de réalisation de l'invention, pour lequel l'élément à entrainer en rotation est un disque,
- la figure 3 représente schématiquement une zone du moteur piézoélectrique rotatif de la figure 2, vue en coupe longitudinale radiale,
- la figure 4 représente schématiquement un résonateur d'un moteur piézoélectrique rotatif selon un deuxième mode de réalisation de l'invention,
- la figure 5 représente schématiquement un ensemble de moteurs piézoélectriques rotatifs tels que celui de la figure 2, vu en coupe longitudinale radiale.

### Description détaillée des modes de réalisation préférés

Un moteur piézoélectrique rotatif selon l'invention comporte un élément passif comprenant un disque 40, et un actionneur piézoélectrique permettant de mettre en rotation le disque 40 en utilisant l'effet piézoélectrique.

Dans un premier mode de réalisation de l'invention décrit en référence aux figures 2 et 3, l'actionneur piézoélectrique comporte des moyens d'excitation piézoélectrique, non représentés, et un résonateur 30 comprenant deux bras 31, 32 aptes à osciller. Les moyens d'excitation sont avantageusement constitués de deux parties, chacune attachée à un bras différent. Toutefois, d'autres modes de réalisation des moyens d'excitation sont possibles, ils peuvent par exemple être constitués d'une seule partie disposés au niveau d'une jointure entre les bras. Lors de l'application d'une tension adaptée aux moyens d'excitation, les moyens d'excitation se déforment, et des contraintes mécaniques sont transmises aux bras 31, 32 qui se mettent alors à osciller. Par une conception et un montage appropriés des moyens d'excitation sur les bras, des oscillations multidimensionnelles de forme souhaitée peuvent être réalisées.

Les bras 31, 32 sont connectés au niveau d'une zone de connexion 33, et s'étendent sensiblement parallèlement l'un à l'autre depuis ladite zone de connexion 33. Le résonateur 30 a donc globalement une forme de diapason, c'est-à-dire une forme de U. Toutefois, d'autres formes sont envisageables. Les extrémités des bras non connectées à la zone de connexion 33, sont dites extrémités libres 310, 320. L'amplitude des oscillations des bras 31, 32 est maximale à ces extrémités 310, 320.

L'élément passif comporte en outre un rebord 50 s'étendant sur la totalité du pourtour du disque 40. Le rebord 50 est formé de deux parties : une première partie est connectée au disque 40, une deuxième partie est uniquement connectée à la première partie. La première partie et la deuxième partie forment à elles deux une gorge circulaire entourant le disque 40. En d'autres termes, le rebord 50 présente une section en forme de U, selon une coupe longitudinale radiale de l'élément passif, et le disque 40 est connecté à l'une des extrémités du U. La branche du U connectée au disque 40 est référencée 51, et l'autre branche du U est référencée 52.

Le rebord 50 passe localement entre les extrémités libres 310, 320 des bras 31, 32. Plus précisément, la branche 51 appuie contre l'extrémité libre 310 du bras 31, et la branche 52 appuie contre l'extrémité libre 320 du bras 32, créant ainsi une précontrainte radiale entre le résonateur 30 et l'élément passif, le terme radial faisant référence à un rayon du disque 40.

On comprend que les oscillations multidimensionnelles des extrémités libres 310, 320 des bras 31, 32 permettent d'imposer une rotation au disque 40 autour de son axe par frottement desdites extrémités 310, 320 contre le rebord 50.

On note que dans le mode de réalisation présenté à la figure 2, le résonateur 30 s'étend orthogonalement au disque 40, c'est-à-dire que le plan contenant les axes des bras 31, 32 du résonateur 30 est parallèle au plan défini par le disque 40. Toutefois, toutes les inclinaisons techniquement possibles du résonateur 30 par rapport au disque 40 sont envisageables. Naturellement, plus l'inclinaison est faible, plus l'épaisseur du moteur piézoélectrique est faible, ce qui est primordial dans le domaine horloger.

En outre, le résonateur n'est pas limité à une forme de U ou de diapason. En particulier, dans un deuxième mode de réalisation décrit en référence à la figure 4, les bras pourraient ne pas être rectilignes. Un tel résonateur 30° comprend deux bras 31°, 32°. Lesdits bras 31 °, 32° sont connectés au niveau d'une zone de connexion 33°. Chaque bras 31°, 32° comprend une branche principale 311°, 321°, une extrémité libre 310°, 320°, et une zone de raccord 312°, 322° permettant de connecter la branche principale 311°, 321° et l'extrémité libre 310°, 320°.

Les branches principales 311°, 321° s'étendent sensiblement parallèlement l'une à l'autre depuis ladite zone de connexion 33°. La zone de connexion 33°et les deux branches principales 311 °, 321 °sont au même niveau, c'est-à-dire les axes de la zone de connexion 33° et les axes des deux branches principales 311 °, 321° sont compris dans un même plan.

Les extrémités libres 310°, 320° s'étendent au contraire à un niveau différent, et le plan contenant les axes des extrémités libres 310°, 320° est parallèle au plan des branches principales 311°, 321° mentionné au paragraphe précédent. Dans le mode de réalisation représenté à la figure 3, les zones de raccord 312°, 322° comprennent chacune une portion s'étendant orthogonalement aux branches principales 311°, 321° de sorte à amener les extrémités libres 310°, 320° à un niveau différent de celui des branches principales 311°, 321°. Toutefois, les zones de raccord 312°, 322° pourraient tout à fait être d'une autre forme, l'important étant que le résonateur comprenne deux étages.

Les extrémités libres 310°, 320° s'étendent en direction l'une de l'autre et en vis-à-vis l'une de l'autre, et le rebord 50 passe entre lesdites extrémités libres 310°, 320°. Plus précisément, la branche 51 appuie contre l'extrémité libre 310° du bras 31°, et la branche 52 appuie contre l'extrémité libre 320° du bras 32°. L'actionneur piézoélectrique comporte des moyens d'excitation piézoélectrique, non représentés. Les moyens d'excitation sont avantageusement constitués de deux parties, chacune attachée à une des extrémités libres 310°, 320°. Lors de l'application d'une tension adaptée aux moyens d'excitation, les moyens d'excitation se déforment, et des contraintes mécaniques sont transmises aux extrémités libres 310°, 320° qui se mettent alors à osciller. Par une conception et un montage appropriés des moyens d'excitation sur les bras, des oscillations multidimensionnelles de forme souhaitée peuvent être réalisées. Les oscillations multidimensionnelles des extrémités libres 310°, 320° des bras 31°, 32° permettent d'imposer une rotation au disque 40 autour de son axe par frottement desdites extrémités 310°, 320° contre le rebord 50.

Le disque 40 est par exemple solidaire en rotation avec une aiguille 90, comme par exemple représenté à la figure 2, ce qui rend le moteur piézoélectrique selon l'invention particulièrement adapté aux pièces d'horlogerie, de par sa simplicité et sa compacité. Le disque pourrait alternativement être un disque des quantièmes, un disque de phase de lune, ou n'importe quel type de disque utilisé dans le domaine horloger.

La figure 5 montre un ensemble 101 de moteurs piézoélectriques tels que celui qui a été décrit en référence aux figures 2 et 3, bien que leurs résonateurs pourraient tout à fait être du type de celui décrit en référence à la figure 4. Chaque moteur comporte un résonateur 30, 30', 30" et un élément passif. Chaque résonateur 30, 30', 30" comporte un premier bras 310, 310', 310" et un deuxième bras 320, 320', 320". Chaque élément passif comporte un disque 40, 40', 40" et un rebord 50, 50', 50".

Les disques 40, 40', 40" sont concentriques et superposés. Les disques 40, 40', 40" sont de diamètres différents de sorte que chaque disque 40', 40" recouvre un disque de diamètre plus faible 40, 40', excepté le disque de plus faible diamètre 40. Chaque rebord 50, 50' excepté le rebord 50" accolé au disque de plus grand diamètre 40" est recouvert par un disque de plus grand diamètre 40', 40" que celui auquel le rebord 50, 50' est accolé, de sorte que la gorge qu'il délimite est couverte par ledit disque de plus grand diamètre 40', 40". On comprend qu'avec une telle disposition, les rebords 50, 50', 50" ne se gênent pas.

Chaque résonateur 30, 30', 30" pince localement le rebord associé 50, 50', 50". Dans le mode de réalisation présenté à la figure 4, les résonateurs 30, 30', 30" sont placés les uns à côté des autres, c'est-à-dire à la même position angulaire par rapport aux disques 40, 40', 40". Toutefois, rien n'empêche de les disposer à des positions angulaires différentes les uns par rapport aux autres.

## Revendications

1. Moteur piézoélectrique (100) rotatif comprenant :
- un actionneur piézoélectrique comportant un résonateur (30) comprenant une paire de bras (31, 32) connectés à l'une de leurs extrémités au niveau d'une zone de connexion (33), les deux autres extrémités (310, 320) étant dites libres,
- un élément passif apte à être entrainé en rotation par friction des extrémités libres (310, 320) contre l'élément passif,
l'élément passif comprenant un disque (40) et un rebord (50) s'étendant depuis la périphérie du disque (40), le rebord (50) passant entre les extrémités libres (310, 320) des bras (31, 32), le rebord (50) présentant une section radiale sensiblement en forme de U, de sorte que chacune des deux branches (51, 52) du U appuie sur l'extrémité libre (310, 320) d'un bras (31, 32).

2. Pièce d'horlogerie comportant un moteur piézoélectrique (100) selon la revendication précédente.

3. Pièce d'horlogerie selon la revendication précédente, comportant une aiguille (90) solidaire en rotation du disque (40).

4. Ensemble (101) comprenant au moins deux moteurs piézoélectriques selon l'une des revendications précédentes, les disques (40, 40', 40") des éléments passifs des moteurs piézoélectriques étant concentriques, superposés et de diamètres différents, chaque disque (40', 40") excepté celui de diamètre le plus faible recouvrant les disques de diamètre inférieur (40, 40').

5. Pièce d'horlogerie comportant un ensemble selon la revendication précédente.

6. Pièce d'horlogerie selon la revendication précédente, comportant au moins deux aiguilles telles que chaque disque (40, 40', 40") est solidaire en rotation.

## Patentansprüche

1. Drehbarer piezoelektrischer Motor (100), umfassend:
- einen piezoelektrischen Aktor mit einem Resonator (30), der ein Paar Arme (31, 32) umfasst, die mit einem ihrer Enden an einer Verbindungszone (33) verbunden sind, wobei die beiden anderen Enden (310, 320) als frei bezeichnet werden,
- ein passives Element, das durch Reibung der freien Enden (310, 320) gegen das passive Element in Rotation versetzt werden kann,
wobei das passive Element eine Scheibe (40) und einen Rand (50) umfasst, der sich von der Peripherie der Scheibe (40) erstreckt, wobei der Rand (50) zwischen den freien Enden (310, 320) der Arme (31, 32) hindurch verläuft, und der Rand (50) einen im Radialschnitt im Wesentlichen U-förmigen Querschnitt aufweist, sodass jeder der beiden Schenkel (51, 52) des U auf das freie Ende (310, 320) eines Armes (31, 32) drückt.

2. Uhrwerksteil, das einen piezoelektrischen Motor (100) gemäß dem vorhergehenden Anspruch umfasst.

3. Uhrwerksteil nach dem vorhergehenden Anspruch, das einen Zeiger (90) umfasst, der drehfest mit der Scheibe (40) verbunden ist.

4. Baugruppe (101), umfassend mindestens zwei piezoelektrische Motoren gemäß einem der vorhergehenden Ansprüche, wobei die Scheiben (40, 40', 40") der passiven Elemente der piezoelektrischen Motoren konzentrisch, übereinander angeordnet und von unterschiedlichem Durchmesser sind, wobei jede Scheibe (40', 40") - mit Ausnahme derjenigen mit dem kleinsten Durchmesser - die Scheiben mit kleinerem Durchmesser (40, 40') überdeckt.

5. Uhrwerksteil, das eine Baugruppe gemäß dem vorhergehenden Anspruch umfasst.

6. Uhrwerksteil nach dem vorhergehenden Anspruch, das mindestens zwei Zeiger aufweist, wobei jede der Scheiben (40, 40', 40") drehfest verbunden ist.

## Claims

1. Rotating piezoelectric motor (100) including:
- a piezoelectric actuator comprising a resonator (30) having a pair of arms (31, 32) connected at one of their ends in a connection area (33), the other two ends (310, 320) being referred to as 'free',
- a passive element able to be driven in rotation by the friction of the free ends (310, 320) on the passive element,
the passive element comprising a disc (40) and a rim (50) extending from the periphery of the disc (40), the rim (50) passing between the free ends (310, 320) of the arms (31, 32), the rim (50) having a substantially U-shaped radial cross-section such that each of the two branches (51, 52) of the U rests on the free end (310, 320) of an arm (31, 32).

2. Timepiece including a piezoelectric motor (100) according to the preceding claim.

3. Timepiece according to the preceding claim, comprising a hand (90) integral in rotation with the disc (40).

4. Assembly (101) comprising at least two piezoelectric motors according to any of the preceding claims, the discs (40, 40', 40") of the passive elements of the piezoelectric motors being concentric, superposed and of different diameters, each disc (40', 40"), except the disc of smallest diameter, covering the discs of smaller diameter (40, 40').

5. Timepiece including an assembly according to the preceding claim

6. Timepiece according to the preceding claim, comprising at least two hands such that each disc (40, 40', 40") is integral in rotation with one of the hands.
